# EUROPÄISCHE PATENTSCHRIFT

(11) **EP 0 312 153 B1**
(45) Veröffentlichungstag und Bekanntmachung des Hinweises auf die Patenterteilung: **24.02.1993**
(21) Anmeldenummer: 88202183.5
(22) Anmeldetag: 03.10.1988
(51) Int. Cl.: G11B 21/02, G11B 7/08

(54) **Wiedergabegerät für einen scheibenförmigen Aufzeichnungsträger**
Playback apparatus for disc-shaped record carrier
Appareil de reproduction pour un support d'enregistrement en forme de disque

(30) Priorität: 16.10.1987 AT 2742/87
(43) Veröffentlichungstag der Anmeldung: 19.04.1989
(73) Patentinhaber: Philips Electronics N.V., 5621 BA Eindhoven (NL)
(72) Erfinder: Heinrich, Norbert, NL-5656 AA Eindhoven (NL)
(74) Vertreter: Schrijnemaekers, Hubert Joannes Maria

(56) Entgegenhaltungen:
- EP-A- 0 124 353
- DE-A- 3 707 846
- GB-A- 2 093 628
- US-A- 4 152 728
- PATENT ABSTRACTS OF JAPAN vol. 12, no. 29 (P-660)(2876) 28 Januar 1988, & JP-A-62 180569
- PATENT ABSTRACTS OF JAPAN vol. 8, no. 90 (M-292)(1527) 25 April 1984, & JP-A-59 006464

## Beschreibung

Die Erfindung bezieht sich auf ein Wiedergabegerät für einen rotierend antreibbaren, scheibenförmigen Aufzeichnungsträger, auf dem Informationssignale in Spuren gespeichert sind, mit einer zum Abtasten der Spuren vorgesehenen Abtasteinrichtung, die auf einem in radialer Richtung des Aufzeichnungsträgers verstellbaren Schlitten angebracht ist, der zum Verstellen der Abtasteinrichtung zwischen einer innersten Position und einer äussersten Position von einem Motor her über ein Zahnradgetriebe verstellbar ist, das ein vom Motor her antreibbares Ritzel und zwei von dem Ritzel antreibbare, nebeneinanderliegende, parallel zueinander verschiebbar geführte, mit einer Feder gegeneinander verspannte Zahnstangen aufweist, von denen eine mit dem Schlitten fest verbunden ist, der bei auf eine der genannten Positionen verstellter Abtasteinrichtung mit einem mit demselben fest verbundenen Anschlag an einem gerätefesten Anschlag anliegt.

Bei einem im Handel erhältlichen bekannten Gerät der eingangs angeführten Gattung, bei dem es sich um ein Wiedergabegerät zum Wiedergeben von Tonsignalen von einem mit einem Laserstrahl abtastbaren plattenförmigen Aufzeichnungsträger handelt, das unter der Bezeichnung Compact-Disc-Spieler allgemein bekannt ist, bleibt das Ritzel stets mit beiden Zahnstangen in Eingriff, so dass auch bei an dem gerätefesten Anschlag anliegendem Schlitten das Ritzel mit der mit dem Schlitten fest verbundenen Zahnstangen in Eingriff steht und daher zwischen dem Ritzel und dem Schlitten eine formschlüssige Verbindung besteht. Beim vollständigen Abtasten des Aufzeichnungsträgers, auf dem in einem schmalen inneren Spurbereich Steuersignale, in einem breiten mittleren Spurbereich im wesentlichen die Tonsignale und in einem schmalen äusseren Spurbereich Steuersignale gespeichert sind, wird die Abstasteinrichtung durch Antreiben des Schlittens ausgehend vom inneren Spurbereich in Richtung zum äusseren Spurbereich verstellt und im normalen Betrieb nach Erreichen des äusseren Spurbereiches, bevor die Abtasteinrichtung die äusserste Spur erreicht, durch gegensinniges Antreiben des Schlittens rasch wieder bis zum inneren Spurbereich zurückverstellt, wonach der Antrieb für den Schlitten über einen vom Schlitten her betätigbaren Schalter abgeschaltet wird. Zur Steuerung des vorerwähnten Umschaltvorganges ist der zum Antreiben des Schlittens vorgesehene Motor an eine elektronische Steuerschaltung angeschaltet, die am Beginn eines Abtastvorganges den Motor in einer vorgegebenen Drehrichtung einschaltet und die im normalen Betrieb, bevor die Abtasteinrichtung die äusserste Spur erreicht, die Drehrichtung des Motors umschaltet und den Motor auf eine höhere Drehzahl schaltet. Wenn aber die Drehrichtung des Motors im Falle einer Betriebsstörung nicht umgeschaltet wird und der Motor in der gleichen Drehrichtung weiterläuft, was bei einer Fehlsteuerung durch die Steuerschaltung eintritt, dann stösst der Schlitten mit seinem Anschlag gegen den gerätefesten Anschlag und es kommt aufgrund der durch das in Eingriff befindliche Zahnradgetriebe und den am gerätefesten Anschlag anliegenden Schlitten gebildeten, zur Gänze formschlüssigen Verbindung zwischen dem Motor und dem gerätefesten Anschlag zu einer Überlastung des Motors beziehungsweise des Zahnradgetriebes, wodurch die Gefahr einer Beschädigung dieser Geräteteile besteht.

Die Erfindung hat sich zur Aufgabe gestellt, die vorstehend angeführten Schwierigkeiten zu vermeiden und ein Gerät der eingangs angeführten Gattung zu schaffen, bei dem auf einfache Weise eine Überlastung des Motors beziehungsweise des Zahnradgetriebes unterbunden ist. Hierfür ist die Erfindung dadurch gekennzeichnet, dass bei an dem gerätefesten Anschlag anliegendem Schlitten die mit dem Schlitten fest verbundene Zahnstange ausser Eingriff vom Ritzel steht und die andere Zahnstange mit mindestens einem endseitigen Zahn im Eingriffsbereich des Ritzels liegt und die die beiden Zahnstangen gegeneinander verspannende Feder den Schlitten an den gerätefesten Anschlag angelegt hält und die andere Zahnstange in Richtung zu dem Ritzel hin vorspannt. Auf diese Weise ist erreicht, dass bei an dem gerätefesten Anschlag anliegendem Schlitten keine zur Gänze formschlüssige Verbindung zwischen dem Motor und dem gerätefesten Anschlag besteht, sondern dass bei an dem gerätefesten Anschlag anliegendem Schlitten mit Kraftübertragung auf den Schlitten zum Teil kraftschlüssig über die die beiden Zahnstangen gegeneinander verspannende Feder erfolgt. Wenn daher beim erfindungsgemässen Gerät in einem Störungsfall die Drehrichtung des Motors vor dem Anlegen des Schlittens an den gerätefesten Anschlag nicht umgeschaltet wird, dann wird die von der Feder zu dem Ritzel hin vorgespannte andere Zahnstange über den mindestens einen endseitigen Zahn derselben vom Ritzel weiterhin angetrieben. Dabei wird der endseitige Zahn aufeinanderfolgend zuerst von einem Zahn des Ritzels mitgenommen und kommt danach ausser Eingriff von diesem Zahn des Ritzels und wird durch die Wirkung der Feder in die nachfolgende Zahnlücke des Ritzels gedrückt und dadurch mit den nachfolgenden Zahn des Ritzels in Eingriff gebracht. Dieser Vorgang wiederholt sich periodisch, so dass die andere Zahnstange eine periodische hin- und hergehende Bewegung ausführt und dabei die Feder periodisch belastet und entlastet wird. Hierdurch ist auf einfache Weise mit den ohnehin vorhandenen Zahnstangen und der ohnehin vorhandenen Feder eine Überlastung des Motors beziehungsweise des Zahnradgetriebes vermieden, ohen dass hierfür separate Massnahmen in Zuge des Zahnradgetriebes vorgesehen sind beziehungsweise eine separate Überlastungsschutzeinrichtung erforderlich ist. Durch das periodische Ineingriffbringen des endseitigen Zahnes der anderen Zahnstange mit den Zähnen des Ritzels unter der Wirkung der Feder entsteht ein periodisches Knacksgeräusch, das den Benützer in akustischer Form über die Fehlfunktion im Gerät informiert.

An dieser Stelle sei erwähnt, dass aus der US-PS 4 152 728 ein Wiedergabegerät für einen rotierend antreibbaren, scheibenförmigen Aufzeichnungsträger mit einem eine Abtasteinrichtung tragenden, von einem Motor über ein Zahnradgetriebe antreibbaren Schlitten bekannt ist, wobei Massnahmen zur Verhinderung einer Überlastung des Motors beziehungsweise des Zahnradgetriebes bei einer Blockierung des Schlittens vorgesehen sind. Dabei sind der Motor und das Zahnradgetriebe im wesentlichen am Schlitten angebracht, wobei das Zahnradgetriebe ein am Schlitten drehbar gelagertes Ritzel aufweist, das sich an einer einzigen im Gerät stationär angeordneten Zahnstange abwälzt, wogegen beim erfindungsgemässen Gerät nur die mit dem Schlitten fest verbundene eine Zahnstange und gegebenenfalls noch die andere Zahnstange am Schlitten angeordnet sind, während die übrigen Teile des Zahnradgetriebes und der Motor geräteseitig angeordnet sind. Zur Verhinderung einer Überlastung des Motors beziehungsweise des Zahradgetriebes bei dem aus der US-PS 4 152 728 bekannten Gerät ist ein weiteres Ritzel des Zahnradgetriebes, das im normalen Betrieb mit einem mit dem am Schlitten drehbar gelagerten Ritzel verbundenen und zu diesem koaxialen Zahnrad in Eingriff steht, auf einem am Schlitten um eine zu den Achsen der beiden Ritzel parallel verlaufende Schwenkachse verschwenkbaren Träger angebracht und mit der Kraft einer an dem Träger angreifenden Feder in Eingriff mit dem Zahnrad gehalten. Beim Blockieren des Schlittens wird das verschwenkbare weitere Ritzel durch Verschwenken desselben entgegen der Kraft der Feder vom Zahnrad periodisch ausser Eingriff gebracht und auf diese Weise die bestehende formschlüssige Verbindung zur Verhinderung einer Überlastung periodisch unterbrochen. Es ist somit zur Erzielung des Überlastungsschutzes eine relativ aufwendige verstellbare Lagerung für das weitere Ritzel erforderlich, wogegen beim erfindungsgemässen Gerät ohne zusätzliche Massnahmen der Überlastungsschutz unmittelbar durch die beiden Zahnstangen und die diese gegeneinander verspannende Feder erreicht ist.

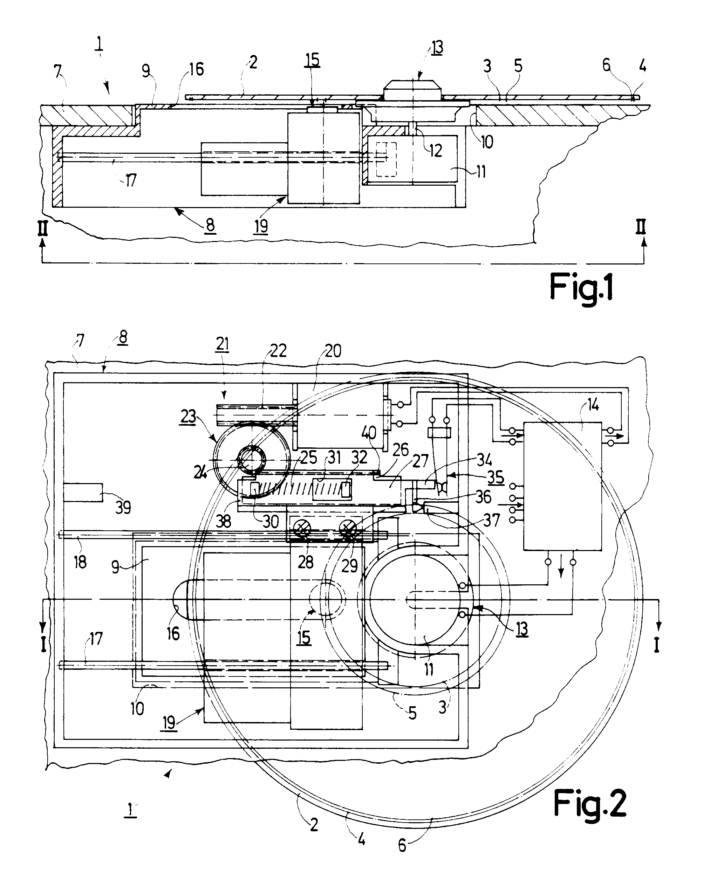

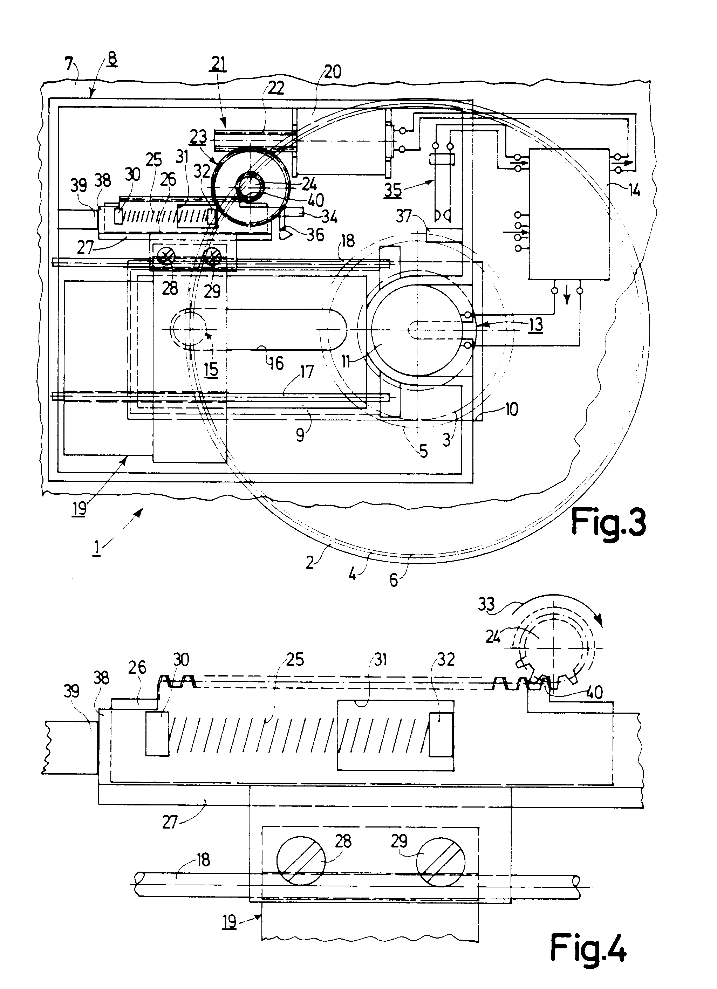

Die Erfindung wird im folgenden anhand eines in den Zeichnungen dargestellten Ausführungsbeispieles, auf das dieselbe jedoch nicht beschränkt sein soll, näher beschrieben. Die Fig. 1 zeigt etwa in natürlicher Grösse in einer Seitenansicht und zum Teil in einem Schnitt gemäss der Linie I-I in Fig. 2 einen im Zusammenhang mit der vorliegenden Erfindung wesentlichen Teil eines Wiedergabegerätes zum Wiedergeben von Informationssignalen von einem rotierend antreibbaren, scheibenförmigen Aufzeichnungsträger, wobei eine auf einem Schlitten angebrachte Abtasteinrichtung auf eine Spur eines inneren Spurbereiches am Aufzeichnungsträger verstellt ist. Die Fig. 2 zeigt das Wiedergabegerät nach Fig. 1 in einer Unteransicht gemäss der Linie II-II in Fig. 1. Die Fig. 3 zeigt analog wie die Fig. 2 das Wiedergabegerät gemäss den Figuren 1 und 2, wobei die Abtasteinrichtung auf die äusserste Spur am Aufzeichnungsträger verstellt ist. Die Fig. 4 zeigt in einer gegenüber der Fig. 3 etwa dreifachen Vergrösserung ein die Antriebseinrichtung für den Schlitten betreffendes Detail des Wiedergabegerätes gemäss Fig. 3.

In den Figuren 1 bis 3 ist ein Wiedergabegerät 1 dargestellt, das zum Wiedergeben von Informationssignalen von einem rotierend antreibbaren, scheibenförmigen Aufzeichnungsträger 2, auf dem die Informationssignale in spiralförmigen Spuren gespeichert sind, ausgebildet ist. Die spiralförmigen Spuren liegen zwischen einer innersten Spur 3 und einer äussersten Spur 4. Zwischen der innersten Spur 3 und einer etwas weiter aussen liegenden Spur 5 liegt ein schmaler innerer Spurbereich, in dem Steuersignale gespeichert sind. Zwischen der Spur 5 und einer beträchtlich weiter aussen liegenden Spur 6 liegt ein breiter mittlerer Spurbereich, in dem im wesentlichen Tonsignale gespeichert sind. Zwischen der Spur 6 und der äussersten Spur 4 liegt ein schmaler Spurbereich, in dem Steuersignale gespeichert sind. Die Spuren 3, 4, 5 und 6 sind in den Figuren 2 und 3 schematisch je mit einer strichpunktierten Linie dargestellt. Der Aufzeichnungsträger 2 ist unter der Bezeichnung "Compact-Disc" allgemein bekannt. Es handelt sich dabei um einen optisch abtastbaren Aufzeichnungsträger, dessen an einer Hauptfläche desselben vorgesehene Spuren mit einem Laserstrahl abtastbar sind, wobei mit dem Laserstrahl die in den Spuren gespeicherten Informationssignale auslesbar sind.

Das Wiedergabegerät 1 weist ein Gehäuse 7 auf, in dem ein Chassis 8 untergebracht ist, das mit einem erhabenen Bereich 9 durch eine Öffnung 10 im Gehäuse 7 hindurchgeführt ist. An dem Chassis 8 ist ein Motor 11 befestigt, auf dessen Motorwelle 12 ein Antriebsteller 13 sitzt, der durch die Öffnung 10 im Gehäuse 7 hindurchgeführt ist. Auf den Antriebsteller 13 ist der Aufzeichnungsträger 2 aufsetztbar. Der Motor 11 ist an eine einen Mikroprozessor enthaltende Steuerschaltung 14 angeschlossen, mit der der Motor mit einer geregelten Spannung versorgbar ist, um den Motor 11 und damit den Aufzeichnungsträger 2 auf drehzahlgeregelte Weise anzutreiben. Die Steuerschaltung 14 ist nur schematisch dargestellt, weil die schaltungsmässige Ausbildung derselben im Zusammenhang mit der vorliegenden Erfindung nicht relevant ist und weil solche Schaltungen an sich allgemein bekannt sind.

Zum Abtasten der Spuren und zum Wiedergeben der darin gespeicherten Informationssignale ist im Wiedergabegerät 1 eine schematisch dargestellte, in radialer Richtung des Aufzeichnungsträgers verstellbare Abtasteinrichtung 15 vorgesehen, die ein Laserstrahlerzeugungssystem enthält, mit dem ein Laserstrahl zum Abtasten der Spuren erzeugbar und auf jeweils die abzutastende Spur ausrichtbar ist. Die Abtasteinrichtung 15 ragt in eine Öffnung 16 im erhabenen Bereich 9 des Chassis 8. Durch die Öffnung 16 hindurch wird der von der Abtasteinrichtung 15 abgegebene Laserstrahl auf die die Spuren aufweisende Hauptfläche des Aufzeichnungsträgers 2 gerichtet und nach seiner Reflexion an den Spuren von einem in der Abtasteinrichtung 15 enthaltenen photoelektrischen Detektionssystem ausgewertet, um die gespeicherten Informationssignale wiederzugeben. In Fig. 2 ist jene Betriebssituation dargestellt, in der die Abtasteinrichtung 15 auf eine Spur im inneren Spurbereich zwischen den beiden Spuren 3 und 5 verstellt ist, so dass der Laserstrahl auf diese Spur ausgerichtet ist. In Fig. 3 ist jene Betriebssituation dargestellt, in der die Abtasteinrichtung 15 auf die äusserste Spur 4 verstellt ist, so dass der Laserstrahl auf die äusserste Spur 4 ausgerichtet ist.

Die Abtasteinrichtung 15 ist auf einem in radialer Richtung des Aufzeichnungsträgers 2 verstellbaren, mit zwei Führungsstangen 17 und 18 verschiebbar geführten Schlitten 19 angebracht. Der Schlitten 19 ist zum Verstellen der Abtasteinrichtung 15 zwischen der innersten Spur 3 und der äussersten Spur 4 von einem weiteren Motor 20 her über ein Zahnradgetriebe 21 verstellbar. Das Zahnradgetriebe 21 weist eine vom weiteren Motor 20 antreibbare Schnecke 22, eine nur schematisch dargestellte, mit der Schnecke 22 in Eingriff stehende, aus zwei koaxialen, mit einer Feder gegeneinander verspannten Schneckenrädern bestehende Schneckenradkombination 23, ein zu der Schneckenradkombination 23 koaxiale Ritzel 24 und zwei von dem Ritzel 24 antreibbare, in axialer Richtung des Ritzels nebeneinanderliegende, mit einer Druckfeder 25 gegeneinander verspannte Zahnstangen 26 und 27 auf, die mit nicht dargestellten Stift-Schlitz-Verbindungen zwischen den beiden Zahnstangen parallel zueinander verschiebbar geführt sind und von denen die eine Zahnstange 27 mit dem Schlitten 19 mit Hilfe von zwei Schrauben 28 und 29 fest verbunden ist. Die Druckfeder 25, die in einem nicht dargestellten Käfig an der einen Zahnstange 27 gehalten ist, stützt sich einerseits an einem von der einen Zahnstange 27 abstehenden Lappen 30 und andererseits an einem von der anderen Zahnstange 26 abstehenden, durch eine Öffnung 31 in der einen Zahnstange 27 hindurchragenden Lappen 32 ab. Wenn beide Zahnstangen 26 und 27 mit dem Ritzel 24 in Eingriff stehen, dann greifen ihre in Eingriff stehenden Zähne unter der Wirkung der Druckfeder 25 in bekannter Weise mit gegensinnigen Zahnflanken an gegensinnigen Zahnflanken der in Eingriff stehenden Zähne des Ritzels 24 an, wodurch die Spielfreiheit zwischen dem Ritzel 24 und den beiden Zahnstangen 26 und 27 erreicht ist. Dabei ist der Lappen 32 entgegen der Kraft der Druckfeder 25 von der vom Lappen 30 abgewandten Begrenzungswand der Öffnung 31 in der einen Zahnstange 27 abgehoben und sind die Zähne der beiden Zahnstangen 26 und 27- in Richtung der Zahnflanken gesehen - zueinander versetzt. Durch das Verspannen der beiden Schneckenräder gegeneinander und der beiden Zahnstangen gegeneinander ist das Zahnradgetriebe 21 spielfrei ausgebildet, so dass eine exakte Verstellung des Schlittens 19 in entgegengesetzten Verstellrichtungen gewährleistet ist.

Der weitere Motor 20 ist ebenfalls an die Steuerschaltung 14 angeschlossen, mit der der weitere Motor 20 mit der jeweils erforderlichen Spannung versorgbar ist, damit der weitere Motor 20 über das Zahnradgetriebe 21 den Schlitten 19 entweder in Richtung von der innersten Spur 3 zur äussersten Spur 4 bzw. in der entgegengesetzten Richtung verstellt. Um den Schlitten 19 in Richtung von der innersten Spur 3 zur äussersten Spur 4 zu verstellen, wird an den weiteren Motor 20 von der Steuerschaltung 14 eine solche Spannung angeschaltet, dass der weitere Motor 20 das Ritzel 24 gemäss den Figuren 2 bis 4 im Uhrzeigersinn antreibt, wie dies in Fig. 4 mit einem Pfeil 33 angegeben ist.

Im normalen Betrieb wird beim vollständigen Abtasten des Aufzeichnungsträgers 2 die Abtasteinrichtung 15 durch Antreiben des Schlittens 19 ausgehend von dem zwischen den Spuren 3 und 5 liegenden inneren Spurbereich in Richtung zu dem zwischen den Spuren 6 und 4 liegenden äusseren Spurbereich verstellt und nach Erreichen des äusseren Spurbereiches, bevor die Abtasteinrichtung 15 die äusserste Spur 4 erreicht, durch gegensinniges Antreiben des Schlitens 19 rasch wieder zum inneren Spurbereich zurückverstellt, wonach der Antrieb für den Schlitten 19 über einen von einem mit dem Schlitten 19 verbundenen Anschlag 34 betätigbaren Schalter 35 abgeschaltet wird. Der mit dem Schlitten 19 verbundene Anschlag 34 ist bei vorliegendem Wiedergabegerät 1 durch einen Fortsatz der mit dem Schlitten 19 fest verbundenen einen Zahnstange 27 gebildet. Selbstverständlich könnte ein solcher Schalter auch vom Schlitten 19 selbst betätigt werden. Der Schalter 35 ist an die Steuerschaltung 14 angeschlossen, die das Schliessen des Schalters 35 detektiert und als Folge davon die Spannungsversorgung des weiteren Motors 20 abschaltet. Somit ist die Betriebsposition des Schlittens 19 und der Abstasteinrichtung 15, wenn dieselbe auf den inneren Spurbereich verstellt ist, durch den Schalter 35 festgelegt. In dieser Betriebsposition des Schlittens 19 stützt sich ein von dem Fortsatz 34 der einen Zahnstange 27 quer abstehender federnder Lappen 36 mit seinem freien Ende an einem Anschlag 37 am Chassis 8 ab, so dass der federnde Lappen 36 auf die eine Zahnstange 27 eine Kraft ausübt, um die beiden Zahnstangen 26 und 27 mit dem Ritzel 24 in Eingriff zu halten.

Wie erwähnt, wird im normalen Betrieb der Antrieb des Schlittens 19 umgeschaltet, bevor die Abtasteinrichtung 15 die äusserste Spur 4 erreicht. Dies geschieht so, dass, sobald die Abtasteinrichtung 15 den äusseren Spurbereich zwischen den beiden Spuren 6 und 4 erreicht, aus den in diesem Spurbereich gespeicherten Steuersignalen eine Steuerinformation abgeleitet und über einen der weiteren Steuereingänge der Steuerschaltung 14 zugeführt wird, wonach die Steuerschaltung die Versorgungsspannung für den weiteren Motor 20 umpolt und auf einen höheren Wert schaltet; auch diese Massnahme ist bei solchen Geräten allgemein bekannt. Durch Störeinflüsse auf die Steuerschaltung und eine hierdurch ausgelöste Fehlsteuerung kann der Fall eintreten, dass die vorerwähnte Umschaltung des Antriebes des Schlittens 19 nicht erfolgt, wobei dann der weitere Motor 20, nachdem die Abtasteinrichtung 15 den äusseren Spurbereich erreicht hat, in derselben Drehrichtung wie zuvor weiterläuft. In diesem Fall wird der Schlitten 19 so weit verstellt, bis die Abtasteinrichtung 15 auf die äusserste Spur 4 verstellt ist, wie dies in Fig. 3 dargestellt ist. In diesem Fall stösst der Schlitten 19 mit einem mit demselben fest verbundenen Anschlag 38 gegen einen am Chassis 8 vorgesehenen gerätefesten Anschlag 39 und liegt danach mit seinem Anschlag 38 an dem gerätefesten Anslag 39 an. Bei vorliegendem Wiedergabegerät 1 ist der mit dem Schlitten 19 fest verbundene Anschlag 38 durch einen Fortsatz der mit dem Schlitten 19 fest verbundenen einen Zahnstange 27 gebildet. Selbstverständlich könnte auch ein mit dem Schlitten einstückig verbundener Anschlag, wie eine Schlittenwand selbst, mit einem gerätefesten Anschlag zusammenwirken. Durch das Anlegen des Schlittens 19 an den gerätefesten Anschlag 39 ist gewährleistet, dass die Abtasteinrichtung 15 höchstens bis zur äussersten Spur 4 verstellt werden kann, jedoch nicht darüberhinaus, so dass die Abtasteinrichtung 15 niemals den mit Spuren versehenen Bereich des Aufzeichnungsträgers 2 verlassen kann.

Wie aus Fig. 3 und besonders deutlich aus Fig. 4 ersichtlich ist, steht bei an dem gerätefesten Anschlag 39 mit seinem Anschlag 38 anliegendem Schlitten 19 die mit dem Schlitten fest verbundene eine Zahnstange 27 mit ihrer Verzahnung ausser Eingriff vom Ritzel 24 und liegt die andere Zahnstange 26 mit einem endseitigen Zahn 40 im Eingriffsbereich des Ritzels 24. Dabei hält die die beiden Zahnstangen 26 und 27 gegeneinander verspannende Druckfeder 25 den Schlitten 19 an den gerätefesten Anschlag 39 angelegt und die andere Zahnstange 26 zu dem Ritzel 24 hin vorgespannt. Auf diese Weise ist nunmehr erreicht, dass bei an dem gerätefesten Anschlag 39 anliegendem Schlitten 19 die Kraftübertragung vom weiteren Motor 20 auf den Schlitten 19 zum Teil kraftschlüssig erfolgt, und zwar über die die beiden Zahnstangen 26 und 27 gegeneinander verspannende Druckfeder 25. Wenn daher bei vorliegendem Wiedergabegerät in einem Störungsfall die Drehrichtung des weiteren Motors 20 vor dem Anlegen des Schlittens 19 an den gerätefesten Anschlag 39 nicht umgeschaltet wird und daher das Ritzel 24 nach dem Anlegen des Schlittens 19 an den gerätefesten Anschlag 39 weiterhin gemäss Fig. 4 in Richtung des Pfeiles 33 angetrieben wird, dann wird die von der Druckfeder 25 zu dem Ritzel 24 hin vorgespannte andere Zahnstange 26 über den einen endseitigen Zahn 40 derselben vom Ritzel 24 weiterhin angetrieben. Dabei wird der endseitige Zahn 40 aufeinanderfolgend zuerst von einem Zahn des Ritzels 24 mitgenommen und kommt danach ausser Eingriff von diesem Zahn des Ritzels und wird durch die Wirkung der Druckfeder 25 in die nachfolgende Zahnlücke des Ritzels gedrückt und dadurch mit dem nachfolgenden Zahn des Ritzels in Eingriff gebracht. Dieser Vorgang wiederholt sich periodisch, so dass die andere Zahnstange 276 eine periodische hin- und hergehende Bewegung ausführt und dabei die Druckfeder 25 periodisch belastet, also komprimiert, und entlastet wird. Hierdurch ist beim vorliegenden Wiedergabegerät 1 auf besonders einfache Weise mit den ohnehin vorhandenen Zahnstangen 26 und 27 und der ohnehin vorhandenen Druckfeder 25 eine Überlastung des weiteren Motors 20 beziehungsweise des Zahnradgetriebes 21 vermieden, ohne dass hierfür separate Massnahmen im Zuge des Zahnradgetriebes vorgesehen sind beziehungsweise eine separate Überlastungsschutzeinrichtung erforderlich ist. Durch das periodische Ineingriffbringen des endseitigen Zahnes 40 der anderen Zahnstange 26 mit den Zähnen des Ritzels 24 under der Wirkung der Druckfeder 25 entsteht ein periodisches Knackgeräusch, das den Benützer in akustischer Form über die Fehlfunktion im Wiedergebegerät 1 informiert.

Wenn nach der Behebung einer wie vorstehend erläuterten Fehlsteuerung des weiteren Motors 20 das Ritzel 24 gemäss Fig. 4 entgegen der Richtung des Pfeiles 33 angetrieben wird, dann wird vom Ritzel 24 zuerst über den endseitigen Zahn 40 die andere Zahnstange 26 angetrieben, wobei die gegen diese andere Zahnstange 26 verspannte, mit dem Schlitten 19 fest verbundene eine Zahnstange 27 mitgenommen wird und dabei auch wieder mit dem Ritzel 24 in Eingriff kommt. Die beiden Zahnstangen 26 und 27 greifen dann unter der Wirkung der Druckfeder 25 wieder mit gegensinnigen Zahnflanken ihrer in Eingriff stehenden Zähne an gegensinnigen Zahnflanken der in Eingriff stehenden Zähne des Ritzels 24 an, wodurch wieder die für eine exakte Verstellung des Schlittens 19 in entgegengesetzten Verstellrichtungen erforderliche Spielfreiheit erreicht ist.

Bei dem vorstehend beschriebenen Wiedergabegerät liegt bei an dem gerätefesten Anschlag anliegendem Schlitten die mit dem Schlitten nicht fest verbundene andere Zahnstange mit nur einem endseitigen Zahn im Eingriffsbereich des Ritzels. Es kann diese andere Zahnstange aber auch mit zwei oder mehr endseitigen Zähnen im Eingriffsbereich des Ritzels liegen, wobei dann im Falle einer Fehlsteuerung des Motors zur Schlittenverstellung die andere Zahnstange eine periodische hin- und hergehende Bewegung mit einem grösseren Hub ausführt. Die andere Zahnstange ist beim vorstehend beschriebenen Wiedergabegerät an der mit dem Schlitten fest verbundenen Zahnstange mit Stift-Schlitz-Verbindungen verschiebbar geführt. Es kann die andere Zahnstange aber auch unmittelbar am Schlitten oder auch am Chassis des Gerätes verschiebbar geführt sein. Anstelle einer Druckfeder zum Verspannen der beiden Zahnstangen gegeneinander können auch andere Federn, beispielsweise eine Zugfeder, vorgesehen sein.

## Patentansprüche

1. Wiedergabegerät (1) für einen rotierend antreibbaren, scheibenförmigen Aufzeichnungsträger (2), auf dem Informationssignale in Spuren gespeichert sind, mit einer zum Abtasten der Spuren vorgesehenen Abtasteinrichtung (15), die auf einem in radialer Richtung des Aufzeichnungsträgers verstellbaren Schlitten (19) angebracht ist, der zum Verstellen der Abtasteinrichtung (15) zwischen einer innersten Position und einer äussersten Position von einem Motor (20) her über ein Zahnradgetriebe (21) verstellbar ist, das ein vom Motor (20) her antreibbares Ritzel (24) und zwei von dem Ritzel (24) antreibbare, nebeneinanderliegende, parallel zueinander verschiebbar geführte, mit einer Feder (25) gegeneinander verspannte Zahnstangen (26, 27) aufweist, von denen eine mit dem Schlitten (19) fest verbunden ist, der bei auf eine der genannten Positionen verstellter Abtasteinrichtung (15) mit einem mit demselben fest verbundenen Anschlag (39) an einem gerätefesten Anschlag (39) anliegt, dadurch gekennzeichnet, dass bei an dem gerätefesten Anschlag (39) anliegendem Schlitten (19) die mit dem Schlitten (19) fest verbundene Zahnstange (27) ausser Eingriff vom Ritzel (24) steht und die andere Zahnstange (26) mit mindestens einem endseitigen Zahn (40) im Eingriffsbereich des Ritzels (24) liegt und die die beiden Zahnstangen (26, 27) gegeneinander verspannende Feder (25) den Schlitten (19) an den gerätefesten Anschlag (39) angelegt hält und die andere Zahnstange (26) in Richtung zu dem Ritzel (24) hin vorspannt.

## Claims

1. A reproducing apparatus (1) for a rotatably drivable disc-shaped record carrier (2) on which information signals are stored in spiral tracks, which apparatus comprises a scanning device (15) for scanning the tracks, which scanning device is arranged on a slide (19) which is movable in a radial direction relative to the record carrier, which slide is movable by a motor (20) *via* a gear mechanism (21) to move the scanning device (15) between an innermost position and an outermost position, which gear mechanism comprises a pinion (24) which can be driven by the motor (20) and two juxtaposed toothed racks (26, 27) which can be driven by the pinion (24), which are guided to be movable parallel to one another, and which are tensioned relative to one another by means of a spring (25), one of said toothed racks being fixedly connected to the slide (19) and a stop (39), which is fixedly connected to said one toothed rack, being in engagement with a fixed stop (34) on the apparatus when the scanning device (15) has been moved to one of said positions, characterised in that when the slide is in engagement with the fixed stop (34) on the apparatus the toothed rack (27) connected fixedly to the slide (19) is not in mesh with the pinion (24) and at least one end tooth (40) of the other toothed rack (26) is situated within the meshing range of the pinion (24) and the spring (25) tensioning the two toothed racks (26, 27) relative to one another holds the slide (19) against the fixed stop (39) on the apparatus and urges the other toothed rack (26) towards the pinion (24).

## Revendications

1. Appareil de lecture (1) d'un support d'enregistrement en forme de disque (2) pouvant être animé d'un mouvement de rotation et sur lequel sont stockés des signaux d'information dans des pistes, comportant un dispositif d'exploration (15) conçu pour explorer les pistes et disposé sur un chariot (19) pouvant être déplacé dans le sens radial du support d'enregistrement et qui, pour déplacer le dispositif d'exploration (15) entre une position intérieure et une position extérieure, peut être entraîné par un moteur (20) par l'intermédiaire d'une transmission par engrenages (21) présentant un pignon (24) pouvant être entraîné par le moteur (20) et deux crémaillères voisines (26, 27) maintenues sous contrainte élastique l'une par rapport à l'autre au moyen d'un ressort (25), crémaillères qui peuvent être entraînées par le pignon (24) tout en étant guidées en coulissement parallèlement l'une à l'autre, l'une de ces crémaillères étant reliées rigidement au chariot (19) qui, lorsque le dispositif d'exploration (15) a été amené dans l'une desdites positions, est appuyé contre une butée fixe (39) de l'appareil par une butée (38) reliée rigidement avec le chariot, caractérisé en ce que si le chariot (19) est appuyé contre la butée fixe (39) de l'appareil, la crémaillère (27) reliée rigidement au chariot (19) est désengrenée du pignon (24) et l'autre crémaillère (26) est située par au moins une dent terminale (40) dans la zone d'engrènement du pignon (24) et le ressort (25) par lequel les deux crémaillères (26, 27) sont maintenues sous contrainte élastique l'une par rapport à l'autre maintient le chariot (19) appuyé contre la butée fixe (39) de l'appareil et presse l'autre crémaillère (26) en direction du pignon (24).
